(19) Europäisches Patentamt / European Patent Office / Office européen des brevets

(11) **EP 3 660 694 B1**

(12) **EUROPEAN PATENT SPECIFICATION**

(45) Date of publication and mention
of the grant of the patent:
**30.08.2023  Bulletin 2023/35**

(21) Application number: **18209244.5**

(22) Date of filing: **29.11.2018**

(51) International Patent Classification (IPC):
**G06F 16/20** *(2019.01)*       **G06F 16/2455** *(2019.01)*

(52) Cooperative Patent Classification (CPC):
**G06F 16/2456**

(54) **A METHOD OF STRUCTURING AND QUERYING A DATABASE**

VERFAHREN ZUR STRUKTURIERUNG UND ABFRAGE EINER DATENBANK

PROCÉDÉ DE STRUCTURATION ET D'INTERROGATION D'UNE BASE DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.06.2020  Bulletin 2020/23**

(73) Proprietor: **Zizo Software Limited
Newport Pagnell, Buckinghamshire MK16 9PU
(GB)**

(72) Inventor: **Longshaw, Thomas Benjamin
Milton Keynes, MK1 1BA (GB)**

(74) Representative: **Ashton, Gareth Mark et al
Baron Warren Redfern
1000 Great West Road
Brentford TW8 9DW (GB)**

(56) References cited:
**WO-A1-97/11433     US-A- 6 167 399**

**Description**

FIELD OF THE INVENTION

The invention discloses a method of structuring and querying a database, in particular a method of joining at least two tables with related data together with one another so they can be queried as a whole.

BACKGROUND OF THE INVENTION

There are many situations in which it would be advantageous to join tables storing related data together with one another, so the data can be queried as a whole. A first table may comprise rows corresponding to different records and columns corresponding to different data variables of the records. A second table may also comprise rows corresponding to different records and columns corresponding to different data variables of the records, where at least one of the data variables of the first and second tables are the same data variable as one another, so that data variable can be used to join the records of the first and second tables to one another.

For example, a first table may have a column with a list of cities and another column indicating which country each city is in. A second table may have a column with a list of cities and another column indicating the population of each city. A query may ask what number of people live in all the cities of a specified country, and to obtain the result from the tables it is necessary to join the information in the first and second tables together based on the columns the two tables have in common with one another, i.e. the city columns.

A known method of joining the information in the first and second tables together is to join the rows of the tables together by sorting the rows of the first and second tables so the cities appear in the same order in both of the tables. Then, each row of the first table should have the same city as the corresponding row of the second table. To execute the query, all the rows having the specified country can be identified, and the populations in all those rows can be added together to give the number of people that live in the cities of the specified country.

However, this either requires additional storage to store sorted versions of the first and second tables, or requires the creation of pairs of indexes to link rows of the first table to rows of the second table, and problems can occur when the tables do not have the same numbers of rows as one another. When there are more than two tables that need to be joined to allow a query to be executed, the sorting can become complicated to execute, particularly if a third table to be joined to the first and second tables does not have a data variable in common with both the first and second tables. Such as, continuing the example above, when a third table has columns corresponding to the country and the primary language spoken in the country, but lacks a column corresponding to the cities, meaning it cannot be sorted in the same way as the first and second tables. WO 97/11433 discloses a technique for joining multiple tables in a database system, which uses a join index to designate which record of a first table should be joined with which record of a second table. US 6,167,399 discloses a method for performing queries against a relational database using a join index.

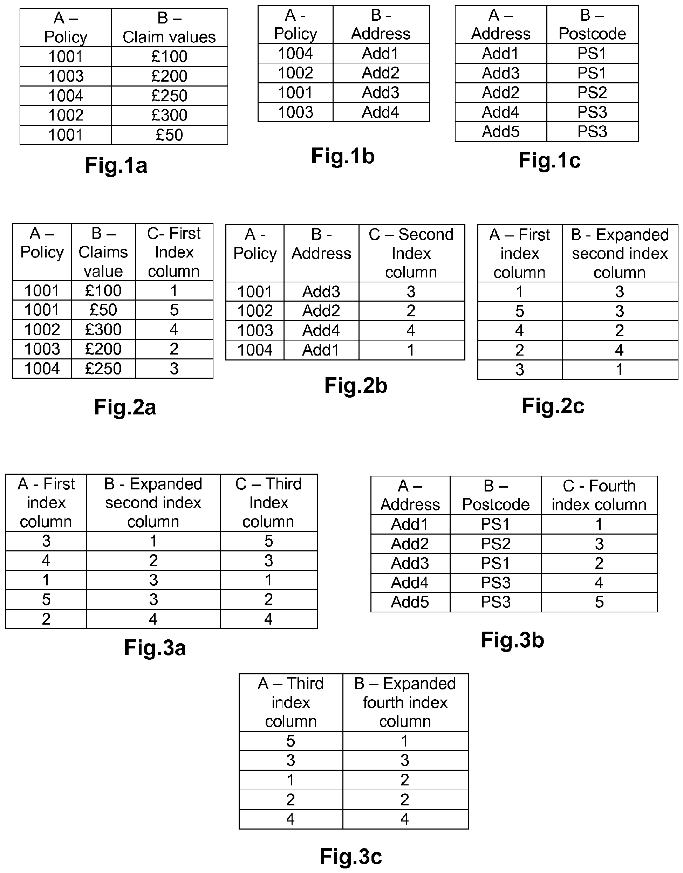

A method of structuring and querying a database that was previously practised by the Applicant, and that was based on the work described in the technical paper Math Sort, Wallace Feurzeig, Communications of the ACM CACM, Volume 3 Issue 11, Nov. 1960, Page 601, will now be described. Some aspects of this method may be novel, and so this method is not admitted as prior art. The early stages of this method as are same as the early stages of the method of the present invention, and so the following detailed description of this method is now provided. In this method, a first table shown in Fig. 1a has rows corresponding to different claims against insurance policies, and columns listing various characteristics of each claim, including a column A listing the policy number and a column B listing the value of the claim. A second table shown in Fig. 1b has rows corresponding to different insurance policies, including a column A listing the policy number and a column B listing the address of the insurance policy. A third table shown in Fig. 1c links addresses to postcodes. The third table includes a column A listing the address, and a column B listing the postcode of the address.

In this simplified example, each of the tables has two columns and four or five rows, storing four or five respective records, although in practice many more columns and rows/records may be present, for example hundreds of columns and millions of rows. The rows of the tables are unsorted, and may be in any arbitrary order.

Joining the first table to the second table is done by sorting both those tables on one of the data variables (columns) they have in common, such as the policy number, as shown in Fig. 2a and 2b. Then, both tables are in the same order as one another, and rows corresponding to a particular policy number can be expected to be found in roughly the same place in each of the sorted tables, allowing corresponding rows to be more easily linked together.

To link the rows of the first and second unsorted tables together, an index table shown in Fig. 2c is created as a bridge between the first and second unsorted tables. Each row of the index table has a first index pointing to a row of the first table of Fig. 1a, and an expanded second index pointing to a row of the second table of Fig. 1b, the rows having the same policy number as one another. For example the first row of the index table of Fig. 2c is [1,3], which links the 1 st row of the Fig. 1a table to the 3rd row of the Fig. 1b table, since both those rows correspond to policy number 1001.

To create the index table of Fig. 2c, for each of the first and second tables a column C of indexes is created as shown in Figs. 2a and 2b, to record where each sorted row of the table appears in the original unsorted table. For example, looking at Fig. 2a, the policy number 1002 is third in the sorted order, and has an index to the first table of 4 in column C, because the policy number 1002 appears in the 4th row of the first table shown in Fig. 1a. Accordingly, the indexes [1,5,4,2,3] in column C of Fig. 2a constitute a first index column of first indexes that point to rows of the first table of Fig. 1a in an order corresponding to a sort on the values of the policy number in the first table. Similarly, the indexes [3,2,4,1] in column C of Fig. 2b constitute a second index column of second indexes that point to rows of the second table of Fig. 1b in an order corresponding to a sort on the values of the policy number in the second table. The first index column therefore specifies the order of the rows of the first table when sorted according to the policy number, and the second index column specifies the order of the rows of the second table when sorted according to the policy number.

Since there is a surjective relationship from the first table to the second table based on policy number, such that each record of the first table maps to only one record of the second table when joining the tables on the policy number, the first table may have more rows than the second table. In other words, each row of the second table has a unique policy number, whereas each row of the first table may have duplicated policy numbers (both rows 1 and 5 of the first table have policy number 1001). Accordingly, the $n^{th}$ row of the sorted order of the first table (Fig.2a) may not have the same policy number as the $n^{th}$ row of the sorted order of the second table (Fig. 2b), and the first and second index columns cannot both be copied directly into the index table of Fig. 2c.

Instead, the first index column [1,5,4,2,3] can be copied directly into the index table of Fig. 2c, and an expanded second index column is created based on the second index column of Fig. 2b, so that each first index is matched with one of the second indexes. This may be done by sequentially stepping through the first indexes in the first index column, and for each first index, looking at the value of the policy number in the row of the first table that is pointed to by the first index, to see whether the policy number has changed compared to the policy number pointed to by the previous first index. The second indexes of the second index column are sequentially stepped through, based on whether the policy number pointed to by the first index has changed compared to the previous first index. If the policy number has not changed, or if the first index is in the first row of the first index column, then the first index is paired with the current second index from the second index column, and that first index and second index are copied into the next available row of the index table. If the policy number has changed, then the first index is paired with the next second index from the second index column, and that first index and second index are copied into the next available row of the index table.

For example, starting with the first row in the index table of Fig. 2c, the first index in row 1 of the first index column of Fig. 2a has a value of 1, which points to row 1 of the first table having a policy number of 1001. Since there is no previous first index to check, the second index in row 1 of the second index column of Fig. 2b, having a value of 3, is paired with the first index, and the first index and second index are copied into the first row of the index table of Fig. 2c. The first row of the index table then has values 1 and 3.

Continuing the example, the next first index in the second row of the first index column of Fig. 2a has a value of 5, which points to row 5 of the first table having a policy number of 1001. The previous first index pointed to row 1 of the first table, also having policy number 1001, and so the policy number has not changed. Therefore, the current second index, in row 1 of the second index column of Fig. 2b, is paired with the first index of row , and the first index and second index are copied into the second row of the index table of Fig. 2c. The second row of the index table then has values 5 and 3.

The next first index in the third row of the first index column of Fig. 2a has a value of 4, which points to row 4 of the first table having a policy number of 1002. The previous first index pointed to row 5 of the first table, having policy number 1001, and so the policy number has changed. Therefore, the next second index, in row 2 of the second index column of Fig. 2b, is paired with the first index, and the first index and second index are copied into the third row of the index table of Fig. 2c. The third row of the index table then has values 4 and 2. The remaining first indexes are stepped through in the same manner.

This process may be implemented using the following computer algorithm, in which P and Q are incremented in two nested While loops to step through the rows of the index table and the second index column respectively:

```
P=1
Q=1
while (P<n)
        while ( P < n ) and ( ( P ==1) or ( k(P)==(k(P-1)) )
        o(P) = i(Q)
        P = P+1
Q = Q+1
```

Where n is the number of rows of the first table, k(P) is the value of the first data variable in the row of the first table that is pointed to by the first index in the Pth row of the first index column A of Fig. 2c, o(P) is the second index in the Pth row of the expanded second index column B of Fig. 2c, and i(Q) is the second index in the Qth row of the second index column C of Fig. 2b.

Before the second index is copied into the row of the expanded second index column, the method may check whether the second index does actually point a row of the second table having a policy number that matches the policy number of the row of the first table that is pointed to by the first index, in case the second table does not contain any policy number that matches the policy number of the row of the first table that is pointed to by the first index. If the second index does not point to a row of the second table having a policy number that matches the policy number of the row of the first table that is pointed to by the first index, then the expanded second index corresponding to the first index is set to a null value, which does not point to any rows of the second table.

The index table of Fig. 2c is used to represent the join between the first and second tables, so that the whole tables do not need to be stored in the sorted orders, but the original unsorted tables can be maintained along with the index table. Since the unsorted tables are maintained, the index table continues to remain valid, even if the first and/or second tables are joined to another table at a later time and another index table is created in the same manner.

It will be noted that the rows of the index table of Fig. 2c are ordered by policy number, i.e. the first row of the index table corresponds to policy 1001 and the fifth row of the index table corresponds to policy 1004. Accordingly, the index table represents the combination of the first and second tables when sorted in order of policy number.

A query on the joined first and second tables may request the return of addresses which have a claim of greater than £225 registered against them. To execute this query, the rows of the first table of Fig. 1a that have claim values of greater than £225 are identified as rows 3 and 4, with claim values of £250 and £300 respectively. The identified rows 3 and 4 are found in the first index column of Fig. 2c, and the corresponding indexes in the second index column are indexes 1 and 2, pointing to rows 1 and 2 of the second table of Fig. 1b. The rows 1 and 2 of the second table of Fig. 1b store addresses Add1 and Add2, and so the answer to the query is that the addresses having claim values of greater than £225 registered against them are addresses Add1 and Add2. To obtain this result, it was necessary to perform two reverse lookups on the tables, from the first table to the index table, and from the index table to the second table.

The third table shown in Fig. 1c can be joined to the combination of the first table and the second table, by sorting both the third table and the index table by a data variable which they have in common, i.e. sorting by address. Specifically, the index table is sorted as shown in Fig. 3a so that the rows of the first table are indexed by the index table in address order, and the third table is sorted by address as shown in Fig. 3b. For example, the first row of the unsorted index table in Fig. 2c has the indexes 1,3, corresponding to policy 1001. When the policies are sorted by address order, which just happens to be the order shown in Fig. 1b, the policy number 1001 is third in the order of addresses. Therefore, when the index table is sorted by address, the row having indexes 1,3 is sorted into the third row of the index table, as shown in Fig. 3a.

Then, both the sorted index table (Fig. 3a) and the sorted third table (Fig. 3b) are in the same order as one another, and rows corresponding to a particular address can be expected to be found in roughly the same place in each of the sorted tables, allowing corresponding rows to be more easily linked together.

To link the rows of the unsorted index table and the unsorted third table together, a further index table shown in Fig. 3c is created as a bridge between those tables, similarly to the creation of the index table of Fig. 2c as a bridge between the first and second tables. Then, there is no need to store the third table and the index table in the sorted orders.

To create the further index table of Fig. 3c, for each of the index and third tables a column C of indexes is created as shown in Figs. 3a and 3b, to record where each sorted row of the table appears in the original unsorted table. The column C of Fig. 3a shows a third index column of third indexes back to the index table of Fig. 2c, and the column C of Fig. 3b shows a fourth index column of fourth indexes back to the third table of Fig. 1c. Since there is a surjective relationship from the index table to the third table, the further index table of Fig. 3c is created by copying the third indexes from Fig. 3a directly into the first column of the further index table, and an expanded fourth index column to the third table is created using the fourth index column, in the same manner as the expanded second index column to the second table was created using the second index column, as was described in detail further above.

Accordingly, the further index table joins the first and second tables to the third table. Each row of the further index table has a pair of indexes that index a row of the unsorted index table of Fig. 2c, and a corresponding row of the unsorted third table of Fig. 1c. For example, looking at the first row of the further index table in Fig. 3c, the index to the index table is recorded as 5, because the first row of the sorted table in Fig. 3a appears in the fifth row of the unsorted table in Fig. 2c, i.e. the row corresponding to indexes 3, 1, which corresponds to policy number 1004 at address Add1. The corresponding fourth index to the third table is recorded as 1 in Fig. 3c, because the first row of the sorted table in Fig. 3b appears in the first row of the unsorted table in Fig. 1c, i.e. the row corresponding to address Add1. Therefore, this row of the further index table links together the rows of the first, second, and third tables that correspond to policy number 1004 and address Add1.

Rows 3 and 4 of the expanded fourth index column of Fig. 3c both have a value of 2, corresponding to address Add3 in Fig. 1c. It will be noted that rows 3 and 4 of the third index column of Fig. 3c have values of 1 and 2, pointing to rows 1 and 2 of the index table of Fig. 2c, which point to rows 1 and 5 of the first table of Fig. 1a, and to row 3 of the second table of Fig. 1b, which correspond to policy 1001 at the same address Add3. The fifth row of Fig. 1c corresponding to address Add5 is not referenced in the expanded fourth index column of Fig. 3c, because there are no records in the first or second tables corresponding to the address Add5.

A query for the joined first, second, and third tables might ask what the total value of claims is in a given postcode, to infer high-risk postcodes. The rows having addresses corresponding to the desired postcode are determined from the third table in Fig. 1c, and for each of those determined rows the row number is found in the column B of the further index table, and the corresponding index in the column A of the further index table points to a row in the index table. That row in the index table points to a row in the first table where the policy number and the value of insurance claims made against the policy is stored, and a row in the second table where the policy number and the address of the policy is stored. Accordingly, the value of insurance claims made in each address of the postcode can be added together to infer how much risk is associated with that postcode.

For example, if the query asks what the total value of claims is in the PS1 postcode, then the rows having addresses corresponding to the postcode PS1 are identified as the first and second rows in the third table of Fig. 1c. For the identified first row of the third table, the index 1 is found in column B of the further index table of Fig. 3c, and the corresponding index in column A of the further index table, which is an index of 5, points to row 5 of the index table. That row 5 in the index table of Fig. 2c points to a row 3 in the first table where the policy number 1004 and claim value of £250 is stored, and a row 1 in the second table where the policy number 1004 and the address Add1 is stored. For the identified second row of the third table, the index number 2 is found in the third and fourth rows of column B of the further index table of Fig. 3c, and the corresponding indexes in column A of the further index table, which are indexes of 1 and 2, point to rows 1 and 2 of the index table. Those rows in the index table point to rows 1 and 5 in the first table where the policy number 1001 and claim values of £100 and £50 are stored, and row 3 in the second table where the policy number 1001 and the address of Add3 are stored. So, the answer to the query of the total value of claims in the PS1 postcode is £250 + £100 +£50 = £400.

To perform that query, it was necessary to perform three reverse lookups based on the index tables, from the third table to the further index table, from the further index table to the index table, and from the index table to the first table. The more tables are joined, the more index tables need to be added and the more reverse lookups need to be performed to execute queries on the data. This is a significant burden, particularly when the tables each contain millions of rows that have to be searched to perform the lookups.

It is therefore an object of the invention to provide a more efficient method of structuring and querying a database comprising at least two tables with related data.

SUMMARY OF THE INVENTION

According to the invention, there is provided a method of structuring and querying a database as defined in claim 1. The database comprises at least two tables of related data, the method comprising receiving first and second tables of data and joining the tables together so they can be queried as a whole. Each table has rows corresponding to data records and columns corresponding to data variables of the records, wherein the first table comprises a column of a same first data variable as a column of the second table so that records of the first table and records of the second table that have a same value of the first data variable as one another can be mapped to one another to join the first and second tables. The first and second tables are of a type where there is a surjective relationship from the first table to the second table such that each record of the first table maps to at most one record of the second table when joining the tables on the first data variable. The structuring of the database comprises: creating a first index column of first indexes that point to rows of the first table in an order corresponding to a sort on the values of the first data variable in the first table, and creating a second index column of second indexes that point to rows of the second table in an order corresponding to a sort on the values of the first data variable in the second table; creating an index table that links pairs of rows of the first and second tables to one another based on the first data variable, wherein the index table comprises the first index column and an expanded second index column based on the second index column, wherein each row of the index table comprises a first index of the first index column and an expanded second index of the expanded second index column, and the expanded second index points to a row of the second table that has a same value of the first data variable as the row of the first table that is pointed to by the first index; creating an inverted first index column from the first index column, such that whilst the first index column maps the rows of the index table to the corresponding rows of the first table, the inverted first index column maps the rows of the first table to the corresponding rows of the index table; and creating a first mapping index column of first mapping indexes, each first mapping index corresponding to a respective row of the first table, wherein each first mapping index points to a row of the second table for which a value of the first data variable in that row of the second table matches a value of the first data variable in the row of the first table that corresponds to the first mapping index, the first mapping index column thereby joining records of the second table to records of the first table, wherein the first mapping index column is created by re-ordering the expanded second index column into the order specified by the inverted first index column, and wherein querying the database comprises: receiving a query requesting the return of one or more values of a second data variable that is stored in a column of the second table and not in the first table, based on one or more input values of a third data variable that is stored in a column of the first table and not in the second table; identifying one or more rows of the first table that correspond to the one or more input values of the third data variable; following the first mapping indexes of the identified rows, to jump from the identified one or more rows of the first table to one or more rows of the second table; and returning the one or more values of the second data variable from the one or more rows of the second table.

The joining of the second table to the first table is done by creating the first mapping index column for the first table, where each row of the first mapping index column stores a first mapping index to designate which row of the second table has the same value for the first data variable as the row of the first table to which the first mapping index corresponds. Since each row in the first mapping index column corresponds to the same row in the first table, no indexes need to be stored for which rows of the first mapping index column correspond to which rows of the first table. Accordingly, the index table of Fig. 2c in the Applicant's earlier method described above in connection with Figs 1a to 3c is no longer required, and can be deleted once the first mapping index column has been created, since it is no longer required to execute queries on the data. This can be a significant saving, since the first mapping index column maps directly from the first table to the second table, without needing to map from the first table to column A of the index table, and then from column B of the index table to the second table.

It would of course be possible to create the first mapping index column by simply going through the rows of the first table one-by-one, for each row searching through all the rows of the second table for matching value of the first data variable. However, such a methodology is extremely inefficient due to the number of data value comparisons that it involves, and impractical for very large databases. The use of an inverse of the first index column of data variables to derive the first mapping index column from the expanded second index column as described herein is much more efficient and can be performed even for very large databases.

The surjective relationship between the first and second tables means that the first index column can be used directly, without any need to produce an expanded version of it, and that its inverse can be applied to the expanded second index column to produce the first mapping index column. A surjective relationship commonly exists when joining one or more existing data tables to reference data, for example such as a national postcode database.

Once the first mapping index has been created, the first index column, inverted first index column, second index column, and expanded second index column are no longer required to execute queries, and one or more of those columns may be deleted to free up storage space. The first table and the first mapping index column can be used to represent the joined first and second tables.

The method may further comprise joining additional tables to the first and second tables, for example a third table, where there is a surjective relationship from the first and second tables (represented by the first table with the first mapping index column) to the third table based on a common data variable. The common data variable could be the first data variable, or it could be another data variable that the third table has in common with either the first or second tables. The join to the third table is carried out in the same manner as the join between the first and second tables, by creating a third index column of third indexes that point to rows of the first table and the associated first mapping index column in an order corresponding to a sort on the common data variable, creating a fourth index column of fourth indexes that point to rows of the third table in an order corresponding to a sort on the values of the common data variable, creating a further index table comprising the third index column and an expanded fourth index column based on the fourth index column, inverting the third index column, and creating a second mapping index column associated with the first table and first index column by re-ordering the expanded fourth index column into the order specified by the inverted third index column.

Each row of the first table is now associated with both a first mapping index of the first mapping index column, linking the row to a row of the second table, and a second mapping index of the second mapping index column, linking the row to a row of the third table.

The joining of the third table to the combination of the first and second tables is done by creating the second mapping index column for the first table, the first table already having the first mapping index column that links to the second table. Since each row in the second mapping index column corresponds to the same row in the first mapping index column and the same row in first table, no indexes need to be stored for which rows of the second mapping index column correspond to which rows of the first mapping index column. Accordingly, the sorting of the index table carried out in the Applicant's earlier method described above in connection with Figs 1a to 3c, is no longer required in the present invention, and the speed of the joining process is significantly improved.

The further index table and the inverted third index column may be deleted once the second mapping index has been created to save storage space, since it is not required to execute queries.

To query data variables stored in the first or second tables but not in the third table, based on input values of data variables stored only in the third table but not in the first or second tables, the rows of the third table that correspond to the input values of the data variables are determined. For each of those determined rows the number of the row is found in the second mapping index column, which automatically corresponds to a row in the first mapping index column, without having to perform any reverse lookup based on an index from the second mapping index column to the first mapping index column. That row in the first mapping index column also automatically corresponds to a row in the first table, without having to perform any reverse lookup based on an index from the first mapping index column to the first table. Accordingly, the need for reverse-lookups when executing queries in the method described above in connection with Figs 1a to 3c, is no longer required in the present invention.

Additionally, only half the storage space is required to store the first and second mapping index columns of the present invention, in comparison to storing the two index tables of the method described above in connection with Figs 1a to 3c.

The tables store pointers to data rather than the actual data itself, and so the method may be implemented with pattern databases. This means that multiple records can hold pointers to the same piece of data stored in memory, to exploit redundancy.

The method is easily scalable to joining further tables of data to the first three tables, by adding further mapping index columns to the first table. The more tables that are joined together, the greater the reduction in sorting and reverse lookups compared to the earlier method described in relation to Figs. 1a to 3c.

The method requires a surjective relationship from the first table to the table that is to be joined to the first table with a mapping index column as described herein, and a surjective relationship commonly exists when joining a table to reference data, such as a postcode database. For a given set of tables to be joined, the first table may be selected and the common data variables that the tables are to be joined based upon may be selected so that the required surjective relationship exists.

The method is computerised, and may be run on any suitable computer system. The computer system may be programmed to execute the method, for example using computer software or firmware. Such computer software may be stored on a physical storage medium, such as a DVD, or carried in a digital signal that is sent to the computer system, such as over the Internet.

BRIEF DESCRIPTION OF THE DRAWINGS

Embodiments of the invention will now be described with reference to the accompanying drawings, in which:

Figs. 1a to 1c show first, second, and third tables forming part of a database;
Fig. 2a shows the table of Fig.1a when sorted by policy number;
Fig. 2b shows the table of Fig.1b when sorted by policy number;
Fig. 2c shows an index table linking rows of the Fig. 1a table to rows of the Fig. 1b table, the index table being ordered according to policy number;
Fig. 3a shows the index table of Fig. 2c when sorted into address order;
Fig. 3b shows the table of Fig.1c when sorted into address order;
Fig. 3c shows a further index table linking rows of the Fig. 2c index table to rows of the Fig. 1c table, the further index table being ordered according to address order;
Fig. 4 shows the table of Fig. 1a and Fig. 2c, with an inverted first index column added to the table of Fig. 1a, to map from the table of Fig. 1a to the table of Fig. 2c, according to an embodiment of the invention;
Fig. 5 shows the table of Fig. 1a and Fig. 1b, with a first mapping index column added to the table of Fig. 1a, to map directly from the table of Fig. 1a to the table of Fig. 1b, according to the embodiment of the invention;
Fig. 6 shows the left table of Fig. 5 when sorted according to address order, according to the embodiment of the invention;
Fig. 7 shows the table of Fig.1c when sorted into address order, according to the embodiment of the invention;
Fig. 8 shows the left table of Fig. 5 on the left side, with an inverted third index column to map to the table on the right side, which is a further index table linking between the left table of Fig. 5 and Fig. 1c when those tables are sorted in address order, according to the embodiment of the invention; and
Fig. 9 shows the table of Fig. 5 on the left side, with a second mapping index column to map directly from the table of Fig. 1a to the table of Fig. 1c, according to the embodiment of the invention.

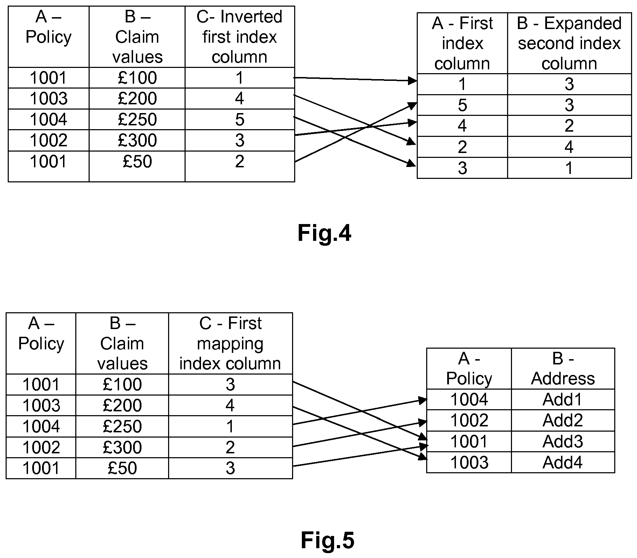

The tables of Figs. 1a to 1c are tables to be structured into a database for querying as a whole, and the tables of Fig. 2a to 2c indicate sorts on the tables of Figs. 1a to 1c, and are used to illustrate both the method previously practiced by the Applicant and the method according to the present invention. The tables of Figs. 3a to 3c are according to the method previously practised by the Applicant, which has not been claimed, and the tables of Figs. 4 to 9 are in accordance with an embodiment of the invention.

DETAILED DESCRIPTION OF THE DRAWINGS

An embodiment of the invention will now be described, in which a database is structured based on the three tables shown in Figs 1a to 1c, and subsequently queried. The first and second tables shown in Figs. 1a and 1b have a first data variable in common with one another, the first data variable being the policy number specified in column A of the first and second tables. The second and third tables shown in Figs. 1b and 1c have a second data variable in common with one another, the second data variable being the address specified in column B of the second table and column A of the third table. In this embodiment, the third table does not have a column corresponding to the first data variable of policy number, but could have in alternate embodiments. In this simplified example, each of the tables has two columns and four or five rows, storing respective records, although many more columns and rows would be present in practice. The rows of the tables are unsorted, and may be in any arbitrary order. In this embodiment, the first table has a column B corresponding to a third data variable of claims value, and the third table has a column B corresponding to a fourth data variable of postcode.

The method follows the same initial steps as the Applicant's earlier method described in the Background section above in connection with Figs. 1a to 2c, however instead of relying on the index table of Fig. 2c as a bridge between the first and second tables, the invention proposes creating a first mapping index column from the index table, to map directly from the first to the second tables. The first mapping index column is created by firstly inverting the first index column of Fig. 2c, so that it maps from the rows of the first table to the corresponding rows of the index table of Fig. 2c, rather than mapping from the rows of the index table to the corresponding rows of the first table, and secondly re-ordering the expanded second index column of Fig. 2c into the order specified by the inverted first index column.

The inversion of the first index column is performed by, for each row of the inverted first index column, looking at what position the row number of the inverted index column appears in within the first index column, and recording that position in the row of the inverted first index column. For example, the first index column shown in Fig. 2c is [1,5,4,2,3]. To fill the first position of the inverted first index column, the position of row number 1 in the first index column is determined. Row number 1 appears in the first position of the first index column, and so the first row of the inverted first index column is a 1.

To fill the second position of the inverted first index column, the position of row number 2 in the first index column is determined. Row number 2 appears in the fourth position of the first index column, and so the second position of the inverted first index column is a 4.

To fill the third position of the inverted first index column, the position of row number 3 in the first index column is determined. Row number 3 appears in the fifth position of the first index column, and so the third position of the inverted first index column is a 5.

To fill the fourth position of the inverted first index column, the position of row number 4 in the first index column is determined. Row number 4 appears in the third position of the first index column, and so the fourth position of the inverted first index column is a 3.

Finally, to fill the fifth position of the inverted first index column, the position of row number 5 in the first index column is determined. Row number 5 appears in the second position of the first index column, and so the fifth position of the inverted first index column is a 2.

Therefore, the inverted first index column is [1,4,5,3,2]. The inverted index column maps from the rows of the first table to the corresponding rows of the index table of Fig. 2c, as can be seen from the tables shown in Fig. 4. Fig. 4 shows the first table of Fig. 1a on the left with a column C corresponding to the inverted first index column added to it, and the index table of Fig. 2c on the right. It can be seen that the value 1 in the first row of the inverted first index column maps to row 1 of the index table, and that the value 4 in the second row of the inverted index column maps to row 4 of the index table, etc. The symmetry between the inverted first index column C on the left and the first index column A on the right can also be seen, for example the number 4 is in the second row on the left in column C, and the number 2 is in the fourth row on the right in column A.

Next, to make the first mapping index column that maps directly to the second table instead of needing to go via the index table, the expanded second index column is re-ordered into the order specified by the inverted first index column. The expanded second index column is [3,3,2,4,1] (as shown in Fig. 2c and Fig. 4), and the inverted first index column is [1,4,5,3,2] (as shown in Fig. 4). Re-ordering the expanded second index column into the order specified by the inverted first index column results in a first mapping index column of [3,4,1,2,3].

This is because the inverted first index column [1,4,5,3,2] specifies that row 1 of the expanded second index column should come first, which is a 3, that row 4 of the expanded second index column should come next, which is a 4, that row 5 of the expanded second index column should come next, which is a 1, that row 3 of the expanded second index column should come next, which is a 2, and that row 2 of the expanded second index column should come next, which is a 3. Mathematically, this can be expressed as $It(B)(i) = I(B)(\sim S(A)(i))$, where $It(B)$ is the first mapping index column, $I(B)$ is the expanded second index column, $\sim S(A)$ is the inverted first index column, and i is the row number, so that for each of the rows 1 to 5:

$$It(B)(1) = I(B)(\sim S(A)(1)) = I(B)(1) = 3$$

$$It(B)(2) = I(B) (\sim S(A)(2)) = I(B)(4) = 4$$

$$It(B)(3) = I(B) (\sim S(A)(3)) = I(B)(5) = 1$$

$$It(B)(4) = I(B) (\sim S(A)(4)) = I(B)(3) = 2$$

$$It(B)(5) = I(B) (\sim S(A)(5)) = I(B)(2) = 3$$

So,

$$It(B) = [3,4,1,2,3]$$

The tables of Fig. 5 show how the first mapping index column maps directly from the rows of the first table to the rows of the second table. The first table of Fig, 1a is shown on the left of Fig. 5, and has the first mapping index column added to it in column C, whereas the second table of Fig. 1b is shown on the right of Fig. 5.

Each first mapping index is associated with a corresponding one of the rows of the first table. In this embodiment, the first mapping index column is stored as an additional column of the first table, but it could be stored separately from the first table in alternative embodiments. Each first mapping index points to a row of the second table for which a value of the first data variable in that row of the second table matches a value of the first data variable in the row of the first table that corresponds to the first mapping index, the first mapping index column thereby joining the records of the first table to the records of the second table.

The arrows in Fig. 5 show the mapping from the first table to the second table based on the first mapping index column. For example, the first row on the left has a value of 3 in the first mapping index column, which links the first row on the left to the third row on the right, because both the first row on the left and the third row on the right correspond to the same value 1001 of the first data variable (policy number).

To perform the same query as discussed in the Background section above of how to determine the addresses having claims values of greater than £225 registered against them, the rows of the first table that have claim values of greater than £225 are identified as rows 3 and 4, on the left of Fig. 5. Instead of needing to refer to the index table of Fig. 2c as with the Applicant's previously practised method, the first mapping index column in column C of Fig. 5 maps directly to rows 1 and 2 of the second table shown in the right of Fig. 5, storing the addresses Add1 and Add2 which provide the answer to the query. Therefore, the index table of Fig. 2c is no longer required to perform the query, reducing the both the memory space and the processing time needed to execute the query.

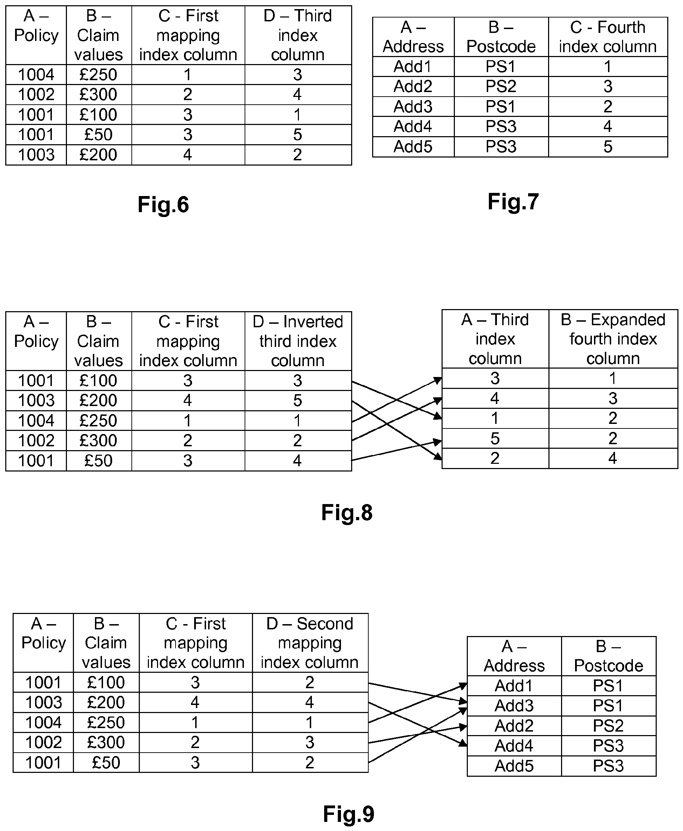

The savings in processing time and memory space increase even further as additional tables are joined to the first and second tables, as will now be described with reference to Figs. 6 to 9, which describe additionally joining the table of Fig. 1c.

The first and second tables of Figs. 1a and 1b, as represented by the first table including the first mapping index column as shown at the left side of Fig. 5, are joined together with the third table of Fig. 1c, by sorting the tables in order of a data variable that they both share in common with one another, in this example the second data variable of address.

Specifically, the first table including the first mapping index column is sorted into address order as shown in Fig. 6, and a third index column D records where each row of the sorted table appears in the unsorted table. The third table is sorted into address order as shown in Fig. 7, and a fourth index column C records where each row of the sorted table appears in the unsorted table. It will be noted that the fourth index column of Fig. 7 is the same as the fourth index column of Fig. 3b, but that the third index column of Fig. 6 is not the same as the third index column of Fig. 3a, because Fig. 6 shows a sort of the first table with the first mapping index column, whereas Fig. 3a shows a sort of the index table of Fig. 2c.

The third index column of Fig. 6 and the fourth index column of Fig. 7 are used to form a further index table at the right side of Fig. 8. The further index table is formed with the third index column of Fig. 6, and with an expanded fourth index column based on the fourth index column of Fig. 7. The expanded fourth index column is created from the fourth index column in just the same way as the expanded second index column was created from the second index column, as was described in detail earlier with reference to Fig. 2c.

The left of Fig. 8 shows the first table with the first mapping index column, plus an inverted third index column which is created from the third index column in just the same way as the inverted first index column was created from the first index column, as was described in detail earlier with reference to Fig. 4. The inverted third index column maps from the first table including the first mapping index column, to the further index table.

Next, referring to the further index table on the right side of Fig. 8, the expanded fourth index column is re-ordered in the order specified by the inverted third index column, to provide the second mapping index column shown added to the first table at the left side of Fig. 9. This re-ordering is done in just the same way as the re-ordering of the expanded second index column into the order specified by the inverted first index column, as was described in detail with reference to Fig. 4.

Fig. 9 shows how the second mapping index column maps from the first table on the left to the third table on the right. For example, the first row in the first table has a policy number of 10001, and claims value of £100, an address of Add3 (by following the first mapping index 3 to the third row of the second table of Fig. 1b), and a postcode of PS1 (by following the second mapping index 2 to the second row of the third table of Fig. 1c). Since each row of the first table now has both one of the first mapping indexes and one of the second mapping indexes, the first, second, and third tables are fully linked together by the first and second mapping indexes.

To perform the query of how to determine the total value of claims in a given postcode, the rows having addresses corresponding to the desired postcode are determined from the third table, and for each of those determined rows the row number is found in the second mapping index column, which automatically corresponds to a row in the first mapping index column, without having to perform any reverse lookup based on an index from the second mapping index column to the first mapping index column. That row in the first mapping index column automatically corresponds to a row in the first table of Fig. 1a where the policy number and claim value is stored, without having to perform any reverse lookup based on an index from the first mapping index column to the first table.

For example, if the query asks what the total value of claims is in the PS1 postcode (the same query as described in the Background section further above), then the rows having addresses corresponding to the postcode PS1 are identified as the first and second rows in the third table of Fig. 1c. For the identified first row of the third table, the row number 1 is found in the third row of the second mapping index column shown in Fig. 9, and that third row stores the £250 value of insurance claims made against the policy 1004. For the identified second row of the third table, the row number 2 is found in the first and fifth rows of the second mapping index column shown in Fig. 9, and the first and fifth rows store the two insurance claims values of £100 and £50 made against policy 1001. So, the answer to the query of the total value of claims in the PS1 postcode is £250 + £100 + £50 = £400, as was reached in the example in the Background section above, but with no need to perform three reverse lookups based on index tables.

Multiple queries can easily be run on the combination of the first to third tables as a whole by using the links defined in the first and second mapping index columns of Fig. 9, without needing an index to point from the second mapping index column to the first mapping index column, or from the first mapping index column to the first table. Accordingly, the effort to execute queries is significantly reduced compared to the method previously practised by the Applicant that was described in the Background section further above.

It will be appreciated that the same method of structuring and querying the database could be applied to many other types of data, and the example of insurance data has just been chosen for convenience.

In this embodiment, the second mapping index column is stored as an additional column of the first table, but it could be stored separately from the first table in alternative embodiments, for example in an index table comprising the first and second mapping index columns.

To maintain the links between the first, second, and third tables, only the first and second mapping index columns need to be stored, and the first, second, and third tables all remain in their original unsorted orders. This method of structuring the database is easily extendable to include additional tables having at least one data variable in common with one of the existing tables, by adding an additional mapping index column to the first table for each additional table.

It is also easy to deal with creating links between tables which have different numbers of rows to one another, or whose records do not fully correspond to one another. Specifically, if a row in the first table for which a mapping index value is to be added to link to a new table, is associated with a value of a data variable, the value either stored directly in the row of the first table, or stored in a row of another table that is pointed to by another mapping index corresponding to the row of the first table, and none of the values of that data variable in the new table have the same value as the value associated with the row of the first table, then the mapping index value can be set at a null value to indicate that no corresponding record exists in the new table. A null value may for example be -1, or any other value which does not point to a row.

The first table can be selected as a table that includes all the data records of interest, so that any extra records present in the other tables are not needed anyway, for example the record with address Add5 and postcode PS3 in Fig. 1c, which is not linked to by the second mapping indexes in Fig. 9. Or, new rows could be created in the first table with mapping indexes to the records of the other tables so that records of the other tables can be linked together even when there is no corresponding record in the first table.

In accordance with the invention, the values of the data variables are pointers which point to actual values, such that each actual value only needs to be stored once to exploit redundancy in the data. For example, the postcode PS1 of the third table is stored in another location and pointers to that location are stored in the third table, so that only one instance of the data PS1 needs to be stored instead of two instances, to save memory. It will be appreciated that a pointer typically requires less memory to store than an item of data.

In summary, there is provided a method of structuring and querying a database that comprises at least first and second tables of related data, both tables comprising a column corresponding to a first data variable, where there is a surjective relationship from the first table to the second table based on the first data variable. First and second index columns are created to represent sorted orders of the first and second tables, and an index table is created comprising the first index column and an expanded second index. The first index column is inverted, and then the expanded second index is re-ordered into the order specified by the inverted first index column, to provide a first mapping index column that links the first table to the second table based on the first variable. The first mapping index column allows the first and second tables to be queried as a whole.

**Claims**

1. A computerised method of structuring and querying a database that comprises at least two tables of related data, the method comprising receiving first and second tables of data and joining the tables together so they can be queried as a whole, each table having rows corresponding to data records and columns corresponding to data variables of the records, wherein the first table comprises a column of a same first data variable as a column of the second table so that records of the first table and records of the second table that have a same value of the first data variable as one another can be mapped to one another to join the first and second tables, wherein the first and second tables are of a type where there is a surjective relationship from the first table to the second table such that each record of the first table maps to at most one record of the second table when joining the tables on the first data variable, wherein structuring the database comprises:

   creating a first index column of first indexes that point to rows of the first table in an order corresponding to a sort on the values of the first data variable in the first table, and creating a second index column of second indexes that point to rows of the second table in an order corresponding to a sort on the values of the first data variable in the second table;

   creating an index table that links pairs of rows of the first and second tables to one another based on the first data variable, wherein the index table comprises the first index column and an expanded second index column based on the second index column, wherein each row of the index table comprises a first index of the first index column and an expanded second index of the expanded second index column, and the expanded second index points to a row of the second table that has a same value of the first data variable as the row of the first table that is pointed to by the first index;

   creating an inverted first index column from the first index column, such that whilst the first index column maps the rows of the index table to the corresponding rows of the first table, the inverted first index column maps the rows of the first table to the corresponding rows of the index table; and

   creating a first mapping index column of first mapping indexes, each first mapping index corresponding to a respective row of the first table, wherein each first mapping index points to a row of the second table for which a value of the first data variable in that row of the second table matches a value of the first data variable in the row of the first table that corresponds to the first mapping index, the first mapping index column thereby joining records of the second table to records of the first table, wherein the first mapping index column is created by re-ordering the expanded second index column into the order specified by the inverted first index column, and wherein querying the database comprises:

      receiving a query requesting the return of one or more values of a second data variable that is stored in a column of the second table and not in the first table, based on one or more input values of a third data variable that is stored in a column of the first table and not in the second table;

      identifying one or more rows of the first table that correspond to the one or more input values of the third data variable;

      following the first mapping indexes of the identified rows, to jump from the identified one or more rows of the first table to one or more rows of the second table; and

      returning the one or more values of the second data variable from the one or more rows of the second table, wherein the values of the data variables are pointers which point to pieces of data stored in memory.

2. The method of claim 1, wherein creating the index table with the expanded second index column based on the second index column, comprises sequentially stepping through the first indexes of the first index column, and for each first index, selecting the second index that points to a row of the second table having a same value of the first data variable as the value of the first data variable in the row of the first table that is pointed to by the first index, and copying the first index and the selected second index as an expanded second index into a row of the index table.

3. The method of claim 2, wherein selecting the second index comprises sequentially stepping through the second indexes of the second index column based on whether the value of the first data variable pointed to by the first index has changed compared to the value of the first data variable pointed to by the previous first index.

4. The method of claim 3, wherein selecting the second index comprises selecting a current second index in the sequence through the second index column if the value of the first data variable pointed to by the first index has not changed compared to the value of the first data variable pointed to by the previous first index, and selecting a next second index in the sequence through the second index column if the value of the first data variable pointed to by the first index has changed compared to the value of the first data variable pointed to by the previous first index.

5. The method of any preceding claim, wherein for each first index of the index table, if there is no row of the second table having a value of the first data variable that matches the value of the first data variable of the row of the first table that is pointed to by the first index, then the expanded second index in a same row of the index table as the first index is set to a null value which does not point to any rows of the second table.

6. The method of any preceding claim, wherein creating an inverted first index column from the first index column comprises for each row of the inverted first index column, looking at what position the row number of the inverted index column appears in the first index column, and recording that position in the row of the inverted first index column.

7. The method of any preceding claim, wherein the method further comprises receiving a third table of data, the third table having rows corresponding to data records and columns corresponding to data variables of the records, wherein the third table comprises one or more columns corresponding to one or more of the first, second or third data variables, and a column of a fourth data variable, wherein structuring the database further comprises:

creating a third index column of third indexes that point to rows of the first table and associated first mapping index column in an order corresponding to a sort on a common data variable, the common data variable being one of the first, second, or third data variables that the third table has in common with the first or second tables, where there is a surjective relationship from the first and second tables to the third table, such that each record of the first table and associated first mapping index to a corresponding record of the second table, map to at most one record of the third table when joining the first and second tables to the third table on the common data variable, and creating a fourth index column of fourth indexes that point to rows of the third table in an order corresponding to a sort on the values of the common data variable;
creating a further index table that links rows of the first table and associated first index mapping column to rows of the third table, wherein the further index table comprises the third index column and an expanded fourth index column based on the fourth index column, wherein each row of the further index table comprises a third index of the third index column and an expanded fourth index of the expanded fourth index column, and the expanded fourth index points to a row of the third table that has a same value of the common data variable as the row of the first table and associated first mapping index that is pointed to by the third index;
creating an inverted third index column from the third index column, such that whilst the third index column maps the rows of the further index table to the corresponding rows of the first table and associated first mapping index column, the inverted third index column maps the rows of the first table and associated first mapping index column to the corresponding rows of the further index table; and
creating a second mapping index column of second mapping indexes, each second mapping index corresponding to a respective row of the first table and associated first mapping index column, wherein each second mapping index points to a row of the third table for which a value of the common data variable in that row of the third table matches a value of the common data variable in the row of the first table and associated first mapping index column that corresponds to the second mapping index, the second mapping index column thereby joining records of the third table to the records of the first table and to the corresponding records of the second table that are joined to the records of the first table by the first mapping index column, wherein the second mapping index column is created by re-ordering the expanded fourth index column into the order specified by the inverted third index column.

8. The method of claim 7, further comprising:

receiving a query requesting the return of one or more values of the third data variable that is stored in a column of the first table and not in the second table, based on one or more input values of a fourth data variable that is stored in a column of the third table and not in the second table;

identifying the row numbers of one or more rows of the third table that have the one or more input values of the fourth data variable;

determining the rows of the second mapping index column that have second mapping indexes equal to the identified row numbers;

returning the one or more values of the third data variable from the rows of the first table that correspond to the determined rows of the second mapping index column.

**Patentansprüche**

1. Computergestütztes Verfahren zum Strukturieren und Abfragen einer Datenbank, die mindestens zwei Tabellen mit aufeinander bezogenen Daten umfasst, wobei das Verfahren das Empfangen einer ersten und einer zweiten Tabelle mit Daten und das Vereinigen der Tabellen miteinander beinhaltet, so dass sie als Ganzes abgefragt werden können, wobei jede Tabelle Datensätzen entsprechende Reihen und Datenvariablen der Datensätze entsprechende Spalten hat, wobei die erste Tabelle eine Spalte derselben ersten Datenvariablen wie eine Spalte der zweiten Tabelle umfasst, so dass Datensätze der ersten Tabelle und Datensätze der zweiten Tabelle, die denselben Wert der ersten Datenvariablen haben, aufeinander abgebildet werden können, um die erste und zweite Tabelle zu vereinen, wobei die erste und zweite Tabelle von einem Typ sind, bei dem es eine surjektive Beziehung von der ersten Tabelle zur zweiten Tabelle gibt, so dass jeder Datensatz der ersten Tabelle auf höchstens einen Datensatz der zweiten Tabelle abgebildet wird, wenn die Tabellen auf der ersten Datenvariablen vereint werden, wobei das Strukturieren der Datenbank Folgendes beinhaltet:

Erzeugen einer ersten Indexspalte von ersten Indizes, die auf Reihen der ersten Tabelle in einer Reihenfolge zeigen, die einer Sortierung nach den Werten der ersten Datenvariablen in der ersten Tabelle entspricht, und Erzeugen einer zweiten Indexspalte von zweiten Indizes, die auf Reihen der zweiten Tabelle in einer Reihenfolge zeigen, die einer Sortierung nach den Werten der ersten Datenvariablen in der zweiten Tabelle entspricht;

Erzeugen einer Indextabelle, die Paare von Reihen der ersten und zweiten Tabelle auf der Basis der ersten Datenvariablen miteinander verknüpft, wobei die Indextabelle die erste Indexspalte und eine erweiterte zweite Indexspalte auf der Basis der zweiten Indexspalte umfasst, wobei jede Reihe der Indextabelle einen ersten Index der ersten Indexspalte und einen erweiterten zweiten Index der erweiterten zweiten Indexspalte umfasst und der erweiterte zweite Index auf eine Reihe der zweiten Tabelle zeigt, die denselben Wert der ersten Datenvariablen hat wie die Reihe der ersten Tabelle, auf die der erste Index zeigt;

Erzeugen einer invertierten ersten Indexspalte aus der ersten Indexspalte, so dass, während die erste Indexspalte die Reihen der Indextabelle auf die entsprechenden Reihen der ersten Tabelle abbildet, die invertierte erste Indexspalte die Reihen der ersten Tabelle auf die entsprechenden Reihen der Indextabelle abbildet; und

Erzeugen einer ersten Abbildungsindexspalte von ersten Abbildungsindizes, wobei jeder erste Abbildungsindex einer jeweiligen Reihe der ersten Tabelle entspricht, wobei jeder erste Abbildungsindex auf eine Reihe der zweiten Tabelle zeigt, für die ein Wert der ersten Datenvariablen in dieser Reihe der zweiten Tabelle mit einem Wert der ersten Datenvariablen in der Reihe der ersten Tabelle übereinstimmt, die dem ersten Abbildungsindex entspricht, wobei die erste Abbildungsindexspalte dadurch Datensätze der zweiten Tabelle mit Datensätzen der ersten Tabelle vereint, wobei die erste Abbildungsindexspalte durch Umordnen der erweiterten zweiten Indexspalte in die durch die invertierte erste Indexspalte spezifizierte Reihenfolge erzeugt wird, und wobei das Abfragen der Datenbank Folgendes beinhaltet:

Empfangen einer Abfrage, die die Rückgabe eines oder mehrerer Werte einer zweiten Datenvariablen anfordert, die in einer Spalte der zweiten Tabelle und nicht in der ersten Tabelle gespeichert ist, auf der Basis von einem oder mehreren Eingangswerten einer dritten Datenvariablen, die in einer Spalte der ersten Tabelle und nicht in der zweiten Tabelle gespeichert ist;

Identifizieren einer oder mehrerer Reihen der ersten Tabelle, die den ein oder mehreren Eingangswerten der dritten Datenvariablen entsprechen;

Verfolgen der ersten Abbildungsindizes der identifizierten Reihen, um von den identifizierten ein oder mehreren Reihen der ersten Tabelle zu einer oder mehreren Reihen der zweiten Tabelle zu springen; und

Zurückgeben der ein oder mehreren Werte der zweiten Datenvariablen aus den ein oder mehreren Reihen der zweiten Tabelle,

wobei die Werte der Datenvariablen Zeiger sind, die auf im Speicher gespeicherte Datenstücke zeigen.

**2.** Verfahren nach Anspruch 1, wobei das Erzeugen der Indextabelle mit der erweiterten zweiten Indexspalte auf der Basis der zweiten Indexspalte das sequentielle Durchlaufen der ersten Indizes der ersten Indexspalte und für jeden ersten Index das Auswählen des zweiten Index, der auf eine Reihe der zweiten Tabelle zeigt, die denselben Wert der ersten Datenvariablen wie der Wert der ersten Datenvariablen in der Reihe der ersten Tabelle hat, auf die der erste Index zeigt, und das Kopieren des ersten Index und des ausgewählten zweiten Index als erweiterten zweiten Index in eine Reihe der Indextabelle beinhaltet.

**3.** Verfahren nach Anspruch 2, wobei das Auswählen des zweiten Index ein sequentielles Durchlaufen der zweiten Indizes der zweiten Indexspalte auf der Basis davon beinhaltet, ob sich der Wert der ersten Datenvariablen, auf die der erste Index zeigt, im Vergleich zu dem Wert der ersten Datenvariablen, auf die der vorherige erste Index zeigt, geändert hat.

**4.** Verfahren nach Anspruch 3, wobei das Auswählen des zweiten Index das Auswählen eines aktuellen zweiten Index in der Sequenz durch die zweite Indexspalte beinhaltet, wenn sich der Wert der ersten Datenvariablen, auf die der erste Index zeigt, im Vergleich zu dem Wert der ersten Datenvariablen, auf die der vorherige erste Index zeigt, nicht geändert hat, und das Auswählen eines nächsten zweiten Index in der Sequenz durch die zweite Indexspalte, wenn sich der Wert der ersten Datenvariablen, auf die der erste Index zeigt, im Vergleich zu dem Wert der ersten Datenvariablen, auf die der vorherige erste Index zeigt, geändert hat.

**5.** Verfahren nach einem vorherigen Anspruch, wobei für jeden ersten Index der Indextabelle, wenn es keine Reihe der zweiten Tabelle mit einem Wert der ersten Datenvariablen gibt, der mit dem Wert der ersten Datenvariablen der Reihe der ersten Tabelle, auf die der erste Index zeigt, übereinstimmt, der erweiterte zweite Index in derselben Reihe der Indextabelle wie der erste Index auf einen Nullwert gesetzt wird, der auf keine Reihen der zweiten Tabelle zeigt.

**6.** Verfahren nach einem vorherigen Anspruch, wobei das Erzeugen einer invertierten ersten Indexspalte aus der ersten Indexspalte für jede Reihe der invertierten ersten Indexspalte das Feststellen, an welcher Position die Reihennummer der invertierten Indexspalte in der ersten Indexspalte erscheint, und das Aufzeichnen dieser Position in der Reihe der invertierten ersten Indexspalte beinhaltet.

**7.** Verfahren nach einem vorherigen Anspruch, wobei das Verfahren ferner das Empfangen einer dritten Datentabelle beinhaltet, wobei die dritte Tabelle Datensätzen entsprechende Reihen und Datenvariablen der Datensätze entsprechende Spalten hat, wobei die dritte Tabelle eine oder mehrere Spalten entsprechend einer oder mehreren der ersten, zweiten oder dritten Datenvariablen, und eine Spalte einer vierten Datenvariablen umfasst, wobei das Strukturieren der Datenbank ferner Folgendes beinhaltet:

Erzeugen einer dritten Indexspalte von dritten Indizes, die auf Reihen der ersten Tabelle und die assoziierte erste Abbildungsindexspalte in einer Reihenfolge entsprechend einer Sortierung auf einer gemeinsamen Datenvariablen zeigen, wobei die gemeinsame Datenvariable eine aus der ersten, zweiten oder dritten Datenvariablen ist, die die dritte Tabelle mit der ersten oder zweiten Tabelle gemeinsam hat, wobei es eine surjektive Beziehung von der ersten und zweiten Tabelle zur dritten Tabelle gibt, so dass jeder Datensatz der ersten Tabelle und der assoziierte erste Abbildungsindex zu einem entsprechenden Datensatz der zweiten Tabelle auf höchstens einen Datensatz der dritten Tabelle abgebildet wird, wenn die erste und zweite Tabelle mit der dritten Tabelle auf der gemeinsamen Datenvariablen vereint werden, und Erzeugen einer vierten Indexspalte mit vierten Indizes, die auf Reihen der dritten Tabelle in einer Reihenfolge entsprechend einer Sortierung nach den Werten der gemeinsamen Datenvariablen zeigen;
Erzeugen einer weiteren Indextabelle, die Reihen der ersten Tabelle und der assoziierten ersten Indexabbildungsspalte mit Reihen der dritten Tabelle verknüpft, wobei die weitere Indextabelle die dritte Indexspalte und eine erweiterte vierte Indexspalte auf der Basis der vierten Indexspalte umfasst, wobei jede Reihe der weiteren Indextabelle einen dritten Index der dritten Indexspalte und einen erweiterten vierten Index der erweiterten vierten Indexspalte umfasst und der erweiterte vierte Index auf eine Reihe der dritten Tabelle zeigt, die denselben Wert der gemeinsamen Datenvariablen hat wie die Reihe der ersten Tabelle und der assoziierte erste Abbildungsindex, auf den der dritte Index zeigt;
Erzeugen einer invertierten dritten Indexspalte aus der dritten Indexspalte, so dass, während die dritte Indexspalte die Reihen der weiteren Indextabelle auf die entsprechenden Reihen der ersten Tabelle und die assoziierte erste Abbildungsindexspalte abbildet, die invertierte dritte Indexspalte die Reihen der ersten Tabelle und die assoziierte erste Abbildungsindexspalte auf die entsprechenden Reihen der weiteren Indextabelle abbildet; und
Erzeugen einer zweiten Abbildungsindexspalte aus zweiten Abbildungsindizes, wobei jeder zweite Abbildungsindex einer jeweiligen Reihe der ersten Tabelle und der assoziierten ersten Abbildungsindexspalte entspricht, wobei jeder zweite Abbildungsindex auf eine Reihe der dritten Tabelle zeigt, für die ein Wert der gemeinsamen Datenvariablen in dieser Reihe der dritten Tabelle mit einem Wert der gemeinsamen Datenvariablen in der Reihe der ersten Tabelle und der assoziierten ersten Abbildungsindexspalte übereinstimmt, die dem zweiten Abbildungsindex entspricht, wobei die zweite Abbildungsindexspalte dadurch Datensätze der dritten Tabelle mit den Datensätzen der ersten Tabelle und mit den entsprechenden Datensätzen der zweiten Tabelle vereint, die mit den Datensätzen der ersten Tabelle durch die erste Abbildungsindexspalte vereint sind, wobei die zweite Abbildungsindexspalte durch Umordnen der erweiterten vierten Indexspalte in die durch die invertierte dritte Indexspalte spezifizierte Reihenfolge erzeugt wird.

8.  Verfahren nach Anspruch 7, das ferner Folgendes beinhaltet:

Empfangen einer Abfrage, die die Rückgabe eines oder mehrerer Werte der dritten Datenvariablen anfordert, die in einer Spalte der ersten Tabelle und nicht in der zweiten Tabelle gespeichert ist, auf der Basis von einem oder mehreren Eingangswerten einer vierten Datenvariablen, die in einer Spalte der dritten Tabelle und nicht in der zweiten Tabelle gespeichert ist;
Identifizieren der Reihennummern von einer oder mehreren Reihen der dritten Tabelle, die die ein oder mehreren Eingangswerte der vierten Datenvariablen haben;
Bestimmen der Reihen der zweiten Abbildungsindexspalte, die zweite Abbildungsindizes haben, die gleich den identifizierten Reihennummern sind;
Zurückgeben der ein oder mehreren Werte der dritten Datenvariablen aus den Reihen der ersten Tabelle, die den bestimmten Reihen der zweiten Abbildungsindexspalte entsprechen.

## Revendications

1.  Procédé informatisé de structuration et d'interrogation d'une base de données qui comprend au moins deux tables de données liées, le procédé comprenant la réception de première et deuxième tables de données et la jointure des tables l'une à l'autre pour qu'elles puissent être interrogées dans leur intégralité, chaque table possédant des rangées qui correspondent à des enregistrements de données et des colonnes qui correspondent à des variables de données des enregistrements, dans lequel la première table comprend une colonne d'une même première variable de données qu'une colonne de la deuxième table de sorte que des enregistrements de la première table et des enregistrements de la deuxième table qui ont une même valeur de la première variable de données que l'une l'autre puissent être mappées l'une à l'autre pour joindre les première et deuxième tables, dans lequel les première et deuxième tables sont d'un type où il existe une relation surjective de la première table à la deuxième table de telle sorte que chaque enregistrement de la première table soit mappé à au plus un enregistrement de la deuxième table lors de la jointure des tables sur la première variable de données, dans lequel la structuration de la base de données comprend :

le fait de créer une première colonne d'index de premiers index qui pointent vers des rangées de la première table suivant un ordre correspondant à un tri sur les valeurs de la première variable de données dans la première table, et créer une deuxième colonne d'index de deuxièmes index qui pointent vers des rangées de la deuxième table suivant un ordre correspondant à un tri sur les valeurs de la première variable de données dans la deuxième table ;
le fait de créer une table d'index qui relie des paires de rangées des première et deuxième tables l'une à l'autre sur la base de la première variable de données, dans lequel la table d'index comprend la première colonne d'index et une deuxième colonne d'index étendue sur la base de la deuxième colonne d'index, dans lequel chaque rangée de la table d'index comprend un premier index de la première colonne d'index et un deuxième index étendu de la deuxième colonne d'index étendue, et le deuxième index étendu pointe vers une rangée de la deuxième table qui a une même valeur de la première variable de données que la rangée de la première table vers laquelle pointe le premier index ;
le fait de créer une première colonne d'index inversée à partir de la première colonne d'index, de telle sorte que, alors que la première colonne d'index mappe les rangées de la table d'index aux rangées correspondantes de la première table, la première colonne d'index inversée mappe les rangées de la première table aux rangées correspondantes de la table d'index ; et
le fait de créer une première colonne d'index de mappage de premiers index de mappage, chaque premier index de mappage correspondant à une rangée respective de la première table, dans lequel chaque premier index de mappage pointe vers une rangée de la deuxième table pour laquelle une valeur de la première variable de données dans cette rangée de la deuxième table concorde avec une valeur de la première variable de données dans la rangée de la première table qui correspond au premier index de mappage, la première colonne d'index de mappage joignant ainsi des enregistrements de la deuxième table à des enregistrements de la première table, dans lequel la première colonne d'index de mappage est créée en réordonnant la deuxième colonne d'index étendue suivant l'ordre spécifié par la première colonne d'index inversée, et

dans lequel l'interrogation de la base de données comprend :

le fait de recevoir une interrogation demandant le retour d'une ou de plusieurs valeurs d'une deuxième variable de données qui est stockée dans une colonne de la deuxième table et pas dans la première table, sur la base d'une ou de plusieurs valeurs d'entrée d'une troisième variable de données qui est stockée dans une colonne de la première table et pas dans la deuxième table ;

le fait d'identifier une ou plusieurs rangées de la première table qui correspondent aux une ou plusieurs valeurs d'entrée de la troisième variable de données ;

le fait de suivre les premiers index de mappage des rangées identifiées, pour sauter des une ou plusieurs rangées identifiées de la première table à une ou plusieurs rangées de la deuxième table ; et

le fait d'obtenir un retour des une ou plusieurs valeurs de la deuxième variable de données à partir des une ou plusieurs rangées de la deuxième table,

dans lequel les valeurs des variables de données sont des pointeurs qui pointent vers des éléments de données stockés en mémoire.

2. Procédé de la revendication 1, dans lequel la création de la table d'index avec la deuxième colonne d'index étendue sur la base de la deuxième colonne d'index, comprend le fait de progresser séquentiellement pas à pas à travers les premiers index de la première colonne d'index, et pour chaque premier index, le fait de sélectionner le deuxième index qui pointe vers une rangée de la deuxième table ayant une même valeur de la première variable de données que la valeur de la première variable de données dans la rangée de la première table vers laquelle est pointé le premier index, et le fait de copier le premier index et le deuxième index sélectionné en tant que deuxième index étendu dans une rangée de la table d'index.

3. Procédé de la revendication 2, dans lequel la sélection du deuxième index comprend le fait de progresser séquentiellement pas à pas à travers les deuxièmes index de la deuxième colonne d'index sur la base de savoir si la valeur de la première variable de données vers laquelle est pointé le premier index a changée en comparaison à la valeur de la première variable de données vers laquelle est pointé le premier index précédent.

4. Procédé de la revendication 3, dans lequel le deuxième index comprend le fait de sélectionner un deuxième index actuel dans la séquence à travers la deuxième colonne d'index si la valeur de la première variable de données vers laquelle est pointé le premier index n'a pas changée en comparaison à la valeur de la première variable de données vers laquelle est pointé le premier index précédent, et le fait de sélectionner un prochain deuxième index dans la séquence à travers la deuxième colonne d'index si la valeur de la première variable de données vers laquelle est pointé le premier index a changée en comparaison à la valeur de la première variable de données vers laquelle est pointé le premier index précédent.

5. Procédé de n'importe quelle revendication précédente, dans lequel pour chaque premier index de la table d'index, s'il n'existe aucune rangée de la deuxième table ayant une valeur de la première variable de données qui concorde avec la valeur de la première variable de données de la rangée de la première table vers laquelle est pointé le premier index, alors le deuxième index étendu dans une même rangée de la table d'index que le premier index est défini à une valeur nulle qui ne pointe vers aucune des rangées de la deuxième table.

6. Procédé de n'importe quelle revendication précédente, dans lequel la création d'une première colonne d'index inversée à partir de la première colonne d'index comprend pour chaque rangée de la première colonne d'index inversée, le fait de voir à quelle position le numéro de rangée de la colonne d'index inversée apparaît dans la première colonne d'index, et le fait d'enregistrer cette position dans la rangée de la première colonne d'index inversée.

7. Procédé de n'importe quelle revendication précédente, le procédé comprenant en outre la réception d'une troisième table de données, la troisième table possédant des rangées qui correspondent à des enregistrements de données et des colonnes qui correspondent à des variables de données des enregistrements, dans lequel la troisième table comprend une ou plusieurs colonnes correspondant à une ou plusieurs des première, deuxième ou troisième variables de données, et une colonne d'une quatrième variable de données, dans lequel la structuration de la base de données comprend en outre :

le fait de créer une troisième colonne d'index de troisièmes index qui pointent vers des rangées de la première table et une première colonne d'index de mappage associée suivant un ordre correspondant à un tri sur une variable de données commune, la variable de données commune étant une variable parmi les première, deuxième, ou troisième variables de données que la troisième table a en commun avec les première ou deuxième tables, où il existe une relation surjective depuis les première et deuxième tables à la troisième table, de telle sorte que chaque enregistrement de la première table et premier index de mappage associé à un enregistrement correspondant de la deuxième table, soient mappés à au plus un enregistrement de la troisième table lors de la jointure des première et deuxième tables à la troisième table sur la variable de donnée commune, et le fait de créer une quatrième colonne d'index de quatrièmes index qui pointent vers des rangées de la troisième table suivant un ordre correspondant à un tri sur les valeurs de la variable de données commune ;

le fait de créer une table d'index supplémentaire qui relie des rangées de la première table et une première colonne d'index de mappage associée à des rangées de la troisième table, dans lequel la table d'index supplémentaire comprend la troisième colonne d'index et une quatrième colonne d'index étendue sur la base de la quatrième colonne d'index, dans lequel chaque rangée de la table d'index supplémentaire comprend un troisième index de la troisième colonne d'index et un quatrième index étendu de la quatrième colonne d'index étendue, et le quatrième index étendu pointe vers une rangée de la troisième table qui a une même valeur de la variable de données commune que la rangée de la première table et le premier index de mappage associé vers laquelle est pointé le troisième index ;

le fait de créer une colonne d'index inversée à partir de la troisième colonne d'index, de telle sorte que, alors que la troisième colonne d'index mappe les rangées de la table d'index supplémentaire aux rangées correspondantes de la première table et à la première colonne d'index de mappage associée, la troisième colonne d'index inversée mappe les rangées de la première table et la première colonne d'index de mappage associée aux rangées correspondantes de la table d'index supplémentaire ; et

le fait de créer un deuxième colonne d'index de deuxièmes index de mappages, chaque deuxième index de mappage correspondant à une rangée respective de la première table et une première colonne d'index de mappage associée, dans lequel chaque deuxième index de mappage pointe vers une rangée de la troisième table pour laquelle une valeur de la variable de données commune dans cette rangée de la troisième table concorde avec une valeur de la variable de données commune dans la rangée de la première table et de la première colonne d'index de mappage associée qui correspond au deuxième index de mappage, la deuxième colonne d'index de mappage joignant ainsi des enregistrements de la troisième table aux enregistrement de la première table et aux enregistrements correspondants de la deuxième table qui sont joints aux enregistrements de la première table par la première colonne d'index, dans lequel la deuxième colonne d'index de mappage est créée en réordonnant la quatrième colonne d'index étendue suivant l'ordre spécifié par la troisième colonne d'index inversée.

8. Procédé de la revendication 7, comprenant en outre :

le fait de recevoir une interrogation demandant le retour d'une ou de plusieurs valeurs de la troisième variable de données qui est stockée dans une colonne de la première table et pas dans la deuxième table, sur la base d'une ou de plusieurs valeurs d'entrée d'une quatrième variable de données qui est stockée dans une colonne de la troisième table et pas dans la deuxième table ;

le fait d'identifier les numéros de rangée d'une ou de plusieurs rangées de la troisième table qui possèdent les une ou plusieurs valeurs d'entrée de la quatrième variable de données ;

le fait de déterminer les rangées de la deuxième colonne d'index de mappage qui possèdent des deuxièmes index de mappage qui sont égaux aux numéros de rangée identifiés ;

le fait d'obtenir un retour des une ou plusieurs valeurs de la troisième variable de données à partir des rangées de la première table qui correspondent aux rangées déterminées de la deuxième colonne d'index de mappage.

| A – Policy | B – Claim values |
|---|---|
| 1001 | £100 |
| 1003 | £200 |
| 1004 | £250 |
| 1002 | £300 |
| 1001 | £50 |

**Fig.1a**

| A - Policy | B - Address |
|---|---|
| 1004 | Add1 |
| 1002 | Add2 |
| 1001 | Add3 |
| 1003 | Add4 |

**Fig.1b**

| A – Address | B – Postcode |
|---|---|
| Add1 | PS1 |
| Add3 | PS1 |
| Add2 | PS2 |
| Add4 | PS3 |
| Add5 | PS3 |

**Fig.1c**

| A – Policy | B – Claims value | C- First Index column |
|---|---|---|
| 1001 | £100 | 1 |
| 1001 | £50 | 5 |
| 1002 | £300 | 4 |
| 1003 | £200 | 2 |
| 1004 | £250 | 3 |

**Fig.2a**

| A - Policy | B - Address | C – Second Index column |
|---|---|---|
| 1001 | Add3 | 3 |
| 1002 | Add2 | 2 |
| 1003 | Add4 | 4 |
| 1004 | Add1 | 1 |

**Fig.2b**

| A – First index column | B - Expanded second index column |
|---|---|
| 1 | 3 |
| 5 | 3 |
| 4 | 2 |
| 2 | 4 |
| 3 | 1 |

**Fig.2c**

| A - First index column | B - Expanded second index column | C – Third Index column |
|---|---|---|
| 3 | 1 | 5 |
| 4 | 2 | 3 |
| 1 | 3 | 1 |
| 5 | 3 | 2 |
| 2 | 4 | 4 |

**Fig.3a**

| A – Address | B – Postcode | C - Fourth index column |
|---|---|---|
| Add1 | PS1 | 1 |
| Add2 | PS2 | 3 |
| Add3 | PS1 | 2 |
| Add4 | PS3 | 4 |
| Add5 | PS3 | 5 |

**Fig.3b**

| A – Third index column | B – Expanded fourth index column |
|---|---|
| 5 | 1 |
| 3 | 3 |
| 1 | 2 |
| 2 | 2 |
| 4 | 4 |

**Fig.3c**

| A –<br>Policy | B –<br>Claim<br>values | C- Inverted<br>first index<br>column |
|---|---|---|
| 1001 | £100 | 1 |
| 1003 | £200 | 4 |
| 1004 | £250 | 5 |
| 1002 | £300 | 3 |
| 1001 | £50 | 2 |

| A - First<br>index<br>column | B - Expanded<br>second index<br>column |
|---|---|
| 1 | 3 |
| 5 | 3 |
| 4 | 2 |
| 2 | 4 |
| 3 | 1 |

**Fig.4**

| A –<br>Policy | B –<br>Claim<br>values | C - First<br>mapping<br>index column |
|---|---|---|
| 1001 | £100 | 3 |
| 1003 | £200 | 4 |
| 1004 | £250 | 1 |
| 1002 | £300 | 2 |
| 1001 | £50 | 3 |

| A -<br>Policy | B -<br>Address |
|---|---|
| 1004 | Add1 |
| 1002 | Add2 |
| 1001 | Add3 |
| 1003 | Add4 |

**Fig.5**

| A – Policy | B – Claim values | C - First mapping index column | D – Third index column |
|---|---|---|---|
| 1004 | £250 | 1 | 3 |
| 1002 | £300 | 2 | 4 |
| 1001 | £100 | 3 | 1 |
| 1001 | £50 | 3 | 5 |
| 1003 | £200 | 4 | 2 |

**Fig.6**

| A – Address | B – Postcode | C - Fourth index column |
|---|---|---|
| Add1 | PS1 | 1 |
| Add2 | PS2 | 3 |
| Add3 | PS1 | 2 |
| Add4 | PS3 | 4 |
| Add5 | PS3 | 5 |

**Fig.7**

| A – Policy | B – Claim values | C - First mapping index column | D – Inverted third index column |
|---|---|---|---|
| 1001 | £100 | 3 | 3 |
| 1003 | £200 | 4 | 5 |
| 1004 | £250 | 1 | 1 |
| 1002 | £300 | 2 | 2 |
| 1001 | £50 | 3 | 4 |

| A – Third index column | B – Expanded fourth index column |
|---|---|
| 3 | 1 |
| 4 | 3 |
| 1 | 2 |
| 5 | 2 |
| 2 | 4 |

**Fig.8**

| A – Policy | B – Claim values | C - First mapping index column | D – Second mapping index column |
|---|---|---|---|
| 1001 | £100 | 3 | 2 |
| 1003 | £200 | 4 | 4 |
| 1004 | £250 | 1 | 1 |
| 1002 | £300 | 2 | 3 |
| 1001 | £50 | 3 | 2 |

| A – Address | B – Postcode |
|---|---|
| Add1 | PS1 |
| Add3 | PS1 |
| Add2 | PS2 |
| Add4 | PS3 |
| Add5 | PS3 |

**Fig.9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9711433 A

- US 6167399 A